# EUROPEAN PATENT APPLICATION

(11) **EP 3 878 881 A2**
(43) Date of publication of application: **15.09.2021**
(21) Application number: 21165639.2
(22) Date of filing: 03.12.2013
(51) Int. Cl.: C08G 8/00, C03C 25/00, C07H 15/00, C08G 12/00, C08G 14/00, C08G 16/00, C08L 1/00, C09J 179/00, C08L 5/00, D04H 1/64, C08L 61/00, C08G 73/02, C09J 105/00, C09J 179/02, D04H 1/587

(54) **BINDERS**

(30) Priority: 05.12.2012 GB 201221872
(62) Divisional of application: 13798703.8
(71) Applicant: Knauf Insulation SPRL, 4600 Visé (BE); Knauf Insulation, Inc., Shelbyville, IN 46176 (US)
(72) Inventor: PACOREL, Bénédicte, 1435 Mont-Saint-Guibert (BE)
(74) Representative: ARC-IP

(57) **Abstract**

The present invention relates to binder compositions with improved amine components, and a method of manufacturing a collection of matter bound by said binder compositions.

## Description

The present invention relates to binder compositions with improved amine components, and a method of manufacturing a collection of matter bound by said binder compositions.

Generally, binders are useful in fabricating articles because they are capable of consolidating non- or loosely-assembled matter. For example, binders enable two or more surfaces to become united. In particular, binders may be used to produce products comprising consolidated fibers. Thermosetting binders may be characterized by being transformed into insoluble and infusible materials by means of either heat or catalytic action. Examples of a thermosetting binder include a variety of phenol-aldehyde, urea-aldehyde, melamine-aldehyde, and other condensation-polymerization materials like furane and polyurethane resins. Binder compositions containing phenol-aldehyde, resorcinol-aldehyde, phenol/aldehyde/urea, phenol/melamine/aldehyde, and the like are widely used for the bonding of fibers, textiles, plastics, rubbers, and many other materials.

The mineral wool and fiber board industries have historically used a phenol formaldehyde binder to bind fibers. Phenol formaldehyde type binders provide suitable properties to the final products; however, environmental considerations have motivated the development of alternative binders. One such alternative binder is a carbohydrate based binder derived from reacting a carbohydrate and a multiprotic acid, for example, U.S. Published Application No. 2007/0027283 and Published PCT Application WO2009/019235. Another alternative binder is the esterification products of reacting a polycarboxylic acid and a polyol, for example, U.S. Published Application No. 2005/0202224. Because these binders do not utilize formaldehyde as a reagent, they have been collectively referred to as formaldehyde-free binders.

One area of current development is to find a replacement for the phenol formaldehyde type binders across the entire range of products in the building and automotive sector (e.g. fiberglass insulation, particle boards, office panels, and acoustical sound insulation). In particular, the previously developed formaldehyde-free binders may not possess all of the desired properties for all the products in this sector. For example, acrylic acid and poly(vinylalcohol) based binders have shown promising performance characteristics. However, these are relatively more expensive than phenol formaldehyde binders, are derived essentially from petroleum-based resources, and have a tendency to exhibit lower reaction rates compared to the phenol formaldehyde based binder compositions (requiring either prolonged cure times or increased cure temperatures).

Carbohydrate-based binder compositions are made of relatively inexpensive precursors and are derived mainly from renewable resources. However, these binders may also require reaction conditions for curing that are substantially different from those conditions under which the traditional phenol formaldehyde binder system is cured.

Specifically, a versatile alternative to the above-mentioned phenol formaldehyde binders is the use of carbohydrate polyamine binders which are polymeric binders obtained by reaction of carbohydrates with polyamines having at least one primary amine group. These carbohydrate polyamine binders are effective substitutes for phenol formaldehyde binders, since they possess similar or superior binding characteristics and are highly compatible to the established processes.

Typically, the carbohydrate polyamine binders are prepared as a solution, such as an aqueous solution, and are subsequently applied onto the loosely assembled matter to be bound. The such wetted loosely assembled matter is then, for example, heat treated to cure the carbohydrate polyamine binder.

Nonetheless, the currently available binder compositions are sometimes linked with drawbacks such as potentially low reaction/curing rates and dissatisfactory internal bond strength and/or swelling properties of the products obtained by using the above binder compositions, and thus there is still plenty of room for improvements to said binder compositions.

Accordingly, the technical problem underlying the present invention is to provide binder compositions which exhibit improved properties such as excellent curing rates and improved internal bond strength and swelling properties of the products obtained by using the binder compositions.

In order to solve the above technical problem, as a first aspect, the present invention provides a binder composition comprising a polymeric product of at least one carbohydrate component and at least one amine component, wherein the at least one amine component comprises a substituted or unsubstituted primary diamine and/or a substituted or unsubstituted primary triamine.

According to the present invention, the term "binder composition" is not particularly restricted and generally includes any polymeric product of a carbohydrate component and the specific amine component of the present invention, which may be used as a binder, e.g. for binding loosely assembled matter, either as such or upon further modification.

According to the present invention, the at least one amine component comprises a substituted or unsubstituted primary diamine and/or a substituted or unsubstituted primary triamine. The at least one amine component is capable of reacting with the carbohydrate component.

As used herein, a "primary diamine" is an organic compound having two primary amino groups (-NH₂). Herein, the term "primary amino group" also includes amino groups in their salt forms, e.g. ammonium groups. Within the scope of the term primary diamine are those compounds which can be modified *in situ* or isomerize to generate a compound having two primary amino groups (-NH₂).

According to the present invention, the primary diamine is a molecule having the general formula H₂N-X-NH₂, wherein the spacer group X separates the two primary amino groups in the primary diamine compound. The spacer group may be any suitable group such as an alkyl, alkenyl, alkynyl, cycloalkyl, cycloalkenyl, heteroalkyl, cycloheteroalkyl, aryl or heteroaryl group, each of which may be optionally substituted.

As used herein, the term "alkyl" includes a chain of carbon atoms, which may optionally be branched. As used herein, the terms "alkenyl" and "alkynyl" independently include a chain of carbon atoms, which may optionally be branched, and include at least one double bond or triple bond, respectively. It is to be understood that alkynyl may also include one or more double bonds. It is to be further understood that alkyl is advantageously of limited length, including C₁-C₂₄, C₁-C₁₈, and C₁-C₁₂. It is to be further understood that alkenyl and/or alkynyl may each be advantageously of limited length, including C₂-C₂₄, C₂-C₁₈, and C₂-C₁₂. In particular, shorter alkyl, alkenyl, and/or alkynyl groups may add less lipophilicity to the compound and accordingly will have different reactivity towards the carbohydrate component and solubility in a binder solution.

As used herein, the term "cycloalkyl" includes a chain of carbon atoms, which may optionally be branched, where at least a portion of the chain is cyclic. Moreover, according to the present invention it is to be noted that "cycloalkylalkyl" is regarded as a subset of cycloalkyl, and that the term "cycloalkyl" also includes polycyclic structures. For example, such cycloalkyls include, but are not limited to, cyclopropyl, cyclopentyl, cyclohexyl, 2-methylcyclopropyl, cyclopentyleth-2-yl, adamantyl, and the like. As used herein, the term "cycloalkenyl" includes a chain of carbon atoms, which may optionally be branched, and includes at least one double bond, where at least a portion of the chain is cyclic. According to the present invention, said at least one double bond may be in the cyclic portion of cycloalkenyl and/or the non-cyclic portion of cycloalkenyl. Moreover, it is to be understood that cycloalkenylalkyl and cycloalkylalkenyl are each regarded as subsets of cycloalkenyl. Moreover, according to the present invention "cycloalkyl" may be polycyclic. Examples of such cycloalkenyls include, but are not limited to, cyclopentenyl, cyclohexylethen-2-yl, cycloheptenylpropenyl, and the like. Furthermore, the chain forming cycloalkyl and/or cycloalkenyl is advantageously of limited length, including C₃-C₂₄, C₃-C₁₈, and C₃-C₁₂. According to the present invention, shorter alkyl and/or alkenyl chains forming cycloalkyl and/or cycloalkenyl, respectively, may add less lipophilicity to the compound and accordingly will have different behavior.

As used herein, the term "heteroalkyl" includes a chain of atoms that includes both carbon and at least one heteroatom, and is optionally branched. Examples of such heteroatoms include nitrogen, oxygen, and sulfur. In certain variations, said hetero-atoms also include phosphorus, and selenium. In one embodiment, a heteroalkyl is a polyether. As used herein, the term "cycloheteroalkyl" including heterocyclyl and heterocycle, includes a chain of atoms that includes both carbon and at least one heteroatom, such as heteroalkyl, and may optionally be branched, where at least a portion of the chain is cyclic. Similarly, examples of cycloheteroalkyl include, but are not limited to, tetrahydrofuryl, pyrrolidinyl, tetrahydropyranyl, piperidinyl, morpholinyl, piperazinyl, homopiperazinyl, quinuclidinyl, and the like.

As used herein, the term "aryl" includes any aromatic residue, which may optionally be substituted. Examples of such aryls include phenyl, naphthyl, benzyl, xylenyl, etc. One or more carbon atoms of the aryl may also by replaced by heteroatoms to form a "heteroaryl". Examples of such heteroatoms include, but are not limited to, oxygene, nitrogen, and sulphur. Accordingly, heteroaryls may, for example, be pyridinyl, indolyl, thiophenyl, furanyl, etc.

According to one embodiment of the present invention, in the binder composition, the polymeric product is a product of the at least one carbohydrate component, the at least one amine component, and at least one additional crosslinker which is different from the amine component. The additional crosslinker is not specifically limited and includes any crosslinking agent known to those skilled in the art. Specific examples of the additional crosslinker include nitrogen-containing compounds such as amines, amino acids, inorganic ammonium salts, etc. Further examples include silicon-containing compounds such as silylethers, alkylsilyl ethers, silanes, etc. According to a preferred embodiment, the additional crosslinker is hexamethylenediamine (HMDA).

The amount of said additional crosslinker used in the binder composition of the present invention is not specifically limited and includes ranges of (based on the total amount of the binder composition) from 1 to 50 wt.-%, 1 to 45 wt.-%, 1 to 40 wt.-%, 1 to 35 wt.-%, 1 to 30 wt.-%, 1 to 25 wt.-%, 1 to 20 wt.-%, 1 to 15 wt.-%, 1 to 10 wt.-% and 1 to 5 wt.-%. Other specific ranges include from 5 to 50 wt.-%, 10 to 50 wt.-%, 15 to 50 wt.-%, 20 to 50 wt.-%, 25 to 50 wt.-%, 30 to 50 wt.-%, 35 to 50 wt.-%, 40 to 50 wt.-% and 45 to 50 wt.-%. According to a specific embodiment, the amount of the additional crosslinker used in the binder composition of the present invention is larger than the amount of the at least one amine component.

The amount of the amine component used in the binder composition of the present invention is not specifically limited and includes ranges of (based on the total amount of the binder composition) from 1 to 50 wt.-%, 1 to 45 wt.-%, 1 to 40 wt.-%, 1 to 35 wt.-%, 1 to 30 wt.-%, 1 to 25 wt.-%, 1 to 20 wt.-%, 1 to 15 wt.-%, 1 to 10 wt.-% and 1 to 5 wt.-%. Other specific ranges include from 5 to 50 wt.-%, 10 to 50 wt.-%, 15 to 50 wt.-%, 20 to 50 wt.-%, 25 to 50 wt.-%, 30 to 50 wt.-%, 35 to 50 wt.-%, 40 to 50 wt.-% and 45 to 50 wt.-%.

According to a preferred embodiment of the present invention, the substituted or unsubstituted primary diamine is a compound wherein the amino groups are separated in the molecule by a spacer group X having a length of 4 to 12 atoms, more preferably 6 to 8 atoms. In case the spacer group X has the above-defined preferred length of atoms, advantageously high curing/reaction rates can be achieved.

According to one embodiment of the present invention, the primary diamine component is not hexamethylenediamine (HMDA).

The primary diamine of the present invention may be substituted or unsubstituted. Herein, the term "substituted" includes the replacement of hydrogen atoms with other functional groups on the radical that is substituted. Such other functional groups illustratively include, but are not limited to, amino, hydroxyl, halo, thiol, alkyl, haloalkyl, heteroalkyl, aryl, arylalkyl, arylheteroalkyl, nitro, sulfonic acids and derivatives thereof, carboxylic acids and derivatives thereof, and the like. Illustratively, any of amino, hydroxyl, thiol, alkyl, haloalkyl, heteroalkyl, aryl, arylalkyl, arylheteroalkyl, and/or sulfonic acid is optionally substituted.

According to a preferred embodiment, the primary diamine contains at least one substituent within the spacer group, since, in this case, advantageously high curing/reaction rates can be achieved. According to specific embodiment of the present invention, the primary diamine compound is 3-phenylhexanediamine or 3-phenylheptanediamine.

As used herein, a "primary triamine" is an organic compound having three primary amino groups (-NH₂). Within the scope of the term primary triamine are those compounds which can be modified *in situ* or isomerize to generate a compound having three primary amino groups (-NH₂).

In the primary triamine molecule, the primary amino groups are separated in the molecule by one or more spacer group(s). The spacer group(s) may be any suitable group such as an alkyl, alkenyl, alkynyl, cycloalkyl, cycloalkenyl, heteroalkyl, cycloheteroalkyl, aryl or heteroaryl group, each of which may be optionally substituted. The terms "alkyl", "alkenyl", "alkynyl", "cycloalkyl", "cycloalkenyl", "heteroalkyl", "cycloheteroalkyl", "aryl", "heteroaryl" and "substituted" are as defined above.

According to a preferred embodiment, the substituted or unsubstituted primary triamine is a compound, wherein at least two of the primary amino groups are separated in the molecule by a spacer group having a length of 4 to 12 atoms, more preferably 6 to 8 atoms. In case at least one spacer group has the above-defined preferred length of atoms, advantageously high curing/reaction rates can be achieved.

According to a further specific embodiment, the primary triamine is tris(3-aminopropyl)amine or tris(2-aminoethyl)amine.

According to another embodiment, the primary triamine of the present invention is the primary polyamine polyether-polyamine. For example, the polyether-polyamine is a trifunctional primary amine having an average molecular weight of 440 known as Jeffamine T-403 Polyetheramine (Huntsman Corporation).

According to the present invention, the term "carbohydrate component" is not specifically restricted and generally includes any carbohydrate compound which is capable of reacting with an amine component.

The amount of the carbohydrate component used in the binder composition of the present invention is not specifically limited and includes ranges of (based on the total amount of the binder composition) from 1 to 99 wt.-%, 1 to 90 wt.-%, 1 to 80 wt.-%, 1 to 70 wt.-%, 1 to 60 wt.-%, 1 to 50 wt.-%, 1 to 40 wt.-%, 1 to 30 wt.-%, 1 to 20 wt.-% and 1 to 10 wt.-%. Other specific ranges include from 20 to 90 wt.-%, 30 to 90 wt.-%, 35 to 90 wt.-%, 40 to 90 wt.-%, 45 to 90 wt.-%, 50 to 90 wt.-%, and 60 to 90 wt.-%.

According to one embodiment of the above-defined binder composition, the at least one carbohydrate component is selected from the group consisting of monosaccharides, disaccharides, polysaccharides or a reaction product thereof.

For example, the carbohydrate component may be a reducing sugar. As used herein, the term "reducing sugar" indicates one or more sugars that contain aldehyde groups, or that can isomerize, i.e., tautomerize, to contain aldehyde groups, which groups may be oxidized with, for example, Cu-ions to afford carboxylic acids. According to the present invention, any such carbohydrate component may be optionally substituted, such as with hydroxy, halo, alkyl, alkoxy, and the like. In any such carbohydrate component, one or more chiral centers may be present, and both possible optical isomers at each chiral center are included in the invention described herein. Further, it is also to be understood that various mixtures, including racemic mixtures, or other diastereomeric mixtures of the various optical isomers of any such carbohydrate component, as well as various geometric isomers thereof, may be used in one or more embodiments described herein.

Moreover, while non-reducing sugars, for instance sucrose, may not be preferable, they may nonetheless be useful within the scope of the present invention by in-situ conversion to a reducing sugar. Further, it is also understood that a monosaccharide, a disaccharide, or a polysaccharide may be partially reacted with a precursor to form a carbohydrate reaction product. To the extent that the carbohydrate reaction product is derived from a monosaccharide, a disaccharide, or a polysaccharide, and maintains similar reactivity with the amine component to form reaction products similar to those of a monosaccharide, a disaccharide, or a polysaccharide with an amine component, the carbohydrate reaction product is within the scope of term carbohydrate component.

Preferably, any carbohydrate component should be sufficiently nonvolatile to maximize its ability to remain available for reaction with the amine component. The carbohydrate component may be a monosaccharide in its aldose or ketose form, including a triose, a tetrose, a pentose, a hexose, or a heptose; or a polysaccharide; or combinations thereof. For example, when a triose serves as the carbohydrate component, or is used in combination with other reducing sugars and/or a polysaccharide, an aldotriose sugar or a ketotriose sugar may be utilized, such as glyceraldehyde and dihydroxyacetone, respectively. When a tetrose serves as the carbohydrate component, or is used in combination with other reducing sugars and/or a polysaccharide, aldotetrose sugars, such as erythrose and threose; and ketotetrose sugars, such as erythrulose, may be utilized. When a pentose serves as the carbohydrate component, or is used in combination with other reducing sugars and/or a polysaccharide, aldopentose sugars, such as ribose, arabinose, xylose, and lyxose; and ketopentose sugars, such as ribulose, arabulose, xylulose, and lyxulose, may be utilized. When a hexose serves as the carbohydrate component, or is used in combination with other reducing sugars and/or a polysaccharide, aldohexose sugars, such as glucose (i.e., dextrose), mannose, galactose, allose, altrose, talose, gulose, and idose; and ketohexose sugars, such as fructose, psicose, sorbose and tagatose, may be utilized. When a heptose serves as the carbohydrate component, or is used in combination with other reducing sugars and/or a polysaccharide, a ketoheptose sugar such as sedoheptulose may be utilized. Other stereoisomers of such carbohydrate components not known to occur naturally are also contemplated to be useful in preparing the binder compositions as described herein. In one embodiment, the carbohydrate component is high fructose corn syrup (HFCS).

As mentioned above, the carbohydrate component may be polysaccharide. For example, the carbohydrate component may be polysaccharide with a low degree of polymerization and includes e.g. molasses, starch, cellulose hydrolysates, or mixtures thereof. According to a specific example, the carbohydrate component is a starch hydrolysate, a maltodextrin, or a mixture thereof. While carbohydrates of higher degrees of polymerization may not be preferable, they may nonetheless be useful within the scope of the present invention by *in-situ* depolymerization.

Furthermore, according to the present invention, the carbohydrate component may be used in combination with a non-carbohydrate polyhydroxy reactant. Examples of non-carbohydrate polyhydroxy reactants which can be used in combination with the carbohydrate component include, but are not limited to, trimethylolpropane, glycerol, pentaerythritol, polyvinyl alcohol, partially hydrolyzed polyvinyl acetate, fully hydrolyzed polyvinyl acetate, and mixtures thereof. For example, the non-carbohydrate polyhydroxy reactant is sufficiently nonvolatile to maximize its ability to remain available for reaction with a monomeric or polymeric polyamine. Moreover, according to the present invention, the hydrophobicity of the non-carbohydrate polyhydroxy reactant may be a factor in determining the physical properties of a binder prepared as described herein.

In a preferred embodiment of the above-defined pre-reacted binder, the at least one carbohydrate component is selected from the group consisting of ribose, arabinose, xylose, lyxose, glucose (dextrose), mannose, galactose, allose, altrose, talose, gulose, idose, fructose, psicose, sorbose, dihydroxyacetone, sucrose and tagatose, as well as mixtures thereof.

According to a preferred embodiment of the present invention, the molar ratio between the at least one carbohydrate component and the substituted or unsubstituted primary diamine is 6:1 to 0.5:1, more preferably 4:1 to 0.75:1, still more preferably 2:1 to 1:1, and most preferably about 1.5:1. According to another preferred embodiment of the present invention, the molar ratio between the at least one carbohydrate component and the substituted or unsubstituted primary triamine is 5:1 to 1:1, more preferably 4:1 to 1.25:1, still more preferably 3:1 to 1.5:1, and most preferably about 2:1.

In a further aspect, the present invention provides a binder composition comprising a water-soluble pre-reacted binder and at least one second amine component, wherein the water-soluble pre-reacted binder comprises the reaction product(s) of at least one carbohydrate component and at least one first amine component, wherein the ratio of the reactive nitrogen-containing groups of the at least one first amine component to the carbonyl groups of the at least one carbohydrate component is substoichiometric such that there is no full conversion of the at least one carbohydrate component, and wherein the at least one second amine component comprises a substituted or unsubstituted primary diamine and/or a substituted or unsubstituted primary triamine.

Herein, the term "reactive nitrogen-containing group" is not particularly restricted and includes any nitrogen-containing groups in the first amine component which are capable of reacting with the carbohydrate component. Specifically, examples of such reactive nitrogen-containing groups include primary, secondary, tertiary and quaternary amino groups.

As used herein, the expression "that there is no full conversion of the at least one carbohydrate component" means that some of the initial carbonyl groups of the carbohydrate component have not reacted with the first amine component and are still present, since the carbonyl groups of the carbohydrate component are in excess with respect to the reactive nitrogen-containing groups of the first amine component. According to a preferred embodiment, the pre-reacted binder as defined above comprises at least 10% of the initial carbonyl groups provided by the carbohydrate component. Further examples of the number of unreacted carbonyl groups in the pre-reacted binder include at least 15%, at least 20%, at least 25%, at least 30%, at least 35%, at least 40%, at least 50%, at least 60% or at least 75% of the carbonyl groups present in the carbohydrate component before reaction with the first amine component.

According to the present invention, the term "pre-reacted binder" is not particularly restricted and generally includes any chemical composition obtained by reacting a carbohydrate component and an amine component, which may be used as a binder, e.g. for binding loosely assembled matter, either as such or upon further modification. The "at least one carbohydrate component" and "the at least one (second) amine component comprising a substituted or unsubstituted primary diamine and/or a substituted or unsubstituted primary triamine" are the same as defined above.

Further, herein the "first amine component" is not particularly limited and includes any chemical compound, or mixture of compounds, which contains at least one amino group and which is capable of reacting with the at least one carbohydrate component. According to one embodiment, in the pre-reacted binder, the at least one first amine component is NH₃, an inorganic amine or an organic amine comprising at least one primary amine group, as well as salts thereof. For example, as the first amine component NH₃ may be used as such (e.g. in form of an aqueous solution), as well as any type of inorganic and organic ammonium salts, as long as these salts are capable of reacting with the carbohydrate component defined above. Specific examples of inorganic ammonium salts include ammonium sulfate (AmSO₄), ammonium chloride, and ammonium nitrate.

According to the present invention, the first amine component may be a polyamine. Herein, the term "polyamine" includes any organic compound having two or more amino groups, which may independently be substituted or unsubstituted.

For example, the polyamine may be a primary polyamine. As used herein, a "primary polyamine" is an organic compound having two or more primary amino groups (-NH₂). Moreover, within the scope of the term primary polyamine are those compounds which can be modified *in situ* or isomerize to generate a compound having two or more primary amino groups (-NH₂).

According to one embodiment of the present invention, the primary polyamine may be a molecule having the formula H₂N-Q-NH₂, wherein Q is an alkyl, alkenyl, alkynyl, cycloalkyl, heteroalkyl, or cycloheteroalkyl, each of which may be optionally substituted. For example, Q may be an alkyl group selected from a group consisting of C₂-C₂₄, an alkyl selected from a group consisting of C₂-C₉, an alkyl selected from a group consisting of C₃-C₇. According to a preferred embodiment, Q is a C₆ alkyl. According to another embodiment, Q may be a cyclohexyl, cyclopentyl or cyclobutyl, or a benzyl group. According to the present invention, the terms "alkyl", "alkenyl", "alkynyl", "cycloalkyl", "cycloalkenyl", "heteroalkyl", "cycloheteroalkyl", "aryl", "heteroaryl" and "substituted" are as defined above.

In another embodiment, the first amine component is the primary polyamine polyether-polyamine. For example, according to the present invention, said polyether-polyamine is a diamine or a triamine. In one embodiment, the polyether-polyamine is a trifunctional primary amine having an average molecular weight of 440 known as Jeffamine T-403 Polyetheramine (Huntsman Corporation).

In a further embodiment, the first amine component may include a polymeric polyamine. For example, polymeric polyamines within the scope of the present invention include chitosan, polylysine, polyethylenimine, poly(N-vinyl-N-methyl amine), polyaminostyrene and polyvinylamines. In a specific example, the first amine component comprises a polyvinyl amine. As used herein, the polyvinyl amine can be a homopolymer or a copolymer.

In a specific embodiment, the first and second amine components may be the same.

Herein, the term "water-soluble" is not specifically restricted and includes all grades of water-solubility of the pre-reacted binder as defined above. In particular, the term "water-soluble" includes water-solubility at 20°C of 100 g/l or more, 150 g/l or more, 200 g/l or more, or 250 g/l or more. For example, the term "water-soluble" may include a water-solubility of the pre-reacted binder as defined above of 300 g/l or more, 400 g/l or more, 500 g/l or more or 600 g/l or more (at 20°C). Also virtual infinitive water-solubility may be regarded to be within the scope of the present invention.

In this context, the expression "water-insoluble" according to the present invention relates to cases where the pre-reacted binder as defined above is essentially not soluble in water at 20°C. For example, the term insoluble includes a water-solubility at 20°C of 50 g/l or less, 40g/l or less, 30 g/l or less, or 20 g/l or less. Preferably, the term water-insoluble includes cases of water-solubility of 10 g/l or less, 5 g/l or less, 1 g/l or less or 0.1 g/l or less.

According to the present invention, an aqueous solution containing 70 wt.-% of the above-defined pre-reacted binder preferably has a viscosity at 20°C of at most 2000 mPa·s, wherein the viscosity of said aqueous solution does not increase by more than 500 mPa·s when left to stand at 20°C for 12 hours.

For example, an aqueous solution containing 70 wt.-% of the above-defined pre-reacted binder (i.e. an aqueous solution containing 70% wt.-% of solids) may have an initial viscosity after its preparation of 100 to 1500 mPa·s, of 150 to 1200 mPa·s, of 200 to 800 mPa·s, of 220 to 600 mPa·s, or of 250 to 400 mPa·s. From the viewpoint of handling, a preferred viscosity is in the range of 280 to 350 mPa·s. Viscosity may be measured using a LV-Torque Brookfield Viscometer, spindle LV-63 at 60 rpm.

Moreover, the viscosity of said aqueous solution should preferably not increase by more than 500 mPa·s when left to stand at 20°C for 24 hours, 48 hours, 72 hours or 96 hours. According to a further preferred embodiment, the viscosity of said aqueous solution should not increase by more than 500 mPa·s within a week, 10 days, 12 days or two weeks. Longer periods, such as three or four weeks, or even two, three or more months, where the viscosity will not increase by more than 500 mPa·s are even more preferable.

According to a further embodiment, the amount by which the viscosity increases within the first 12 hours when leaving an 70 wt.-% aqueous solution of the pre-reacted binder to stand at 20°C should preferably not exceed 450 mPa·s, or 400 mPa·s or even 350 mPa·s. Preferred increases in viscosity include increases of 300 mPa·s or less, 280 mPa·s or less, 250 mPa·s or less and 200 mPa·s or less.

According to the present invention, the above-defined time periods and increases in viscosity are not limited to the examples mentioned above and may be freely combined. For example, preferably, the above-mentioned 70 wt.-% aqueous solution of the pre-reacted binder does not increase in viscosity by more then 300 mPa·s within the first 48 hours after its preparation, or more than 400 mPa·s within two weeks after its preparation. Generally, if the viscosity of a respective aqueous solution becomes too high, e.g. caused by gelling, the pre-reacted binder may become unusable.

In one embodiment, the preparation of the pre-reacted binder is carried out in a solvent, such as water, to directly yield a binder solution usable for storage, shipping and then as a basis for preparing the final binder composition by addition of the second amine component. For example, the pre-reacted binder may be prepared in a concentrated aqueous solution of the carbohydrate component and the first amine component. The thus obtained concentrated pre-reacted binder solution may then be used, for example, at a later time and/or a different place, e.g. by dilution and addition of the second amine component, as an effective binder for consolidating loosely assembled matter.

The term "solvent" used herein is not particularly restricted and includes any solvent which may be used to carry out a reaction between the carbohydrate component and the amine component. For example, the solvent may be water, an organic solvent or mixtures thereof. Examples of organic solvents include alcohols, ethers, esters, ketones, aldehydes, alkanes and cycloalkanes.

According to one embodiment of the above-defined pre-reacted binder, the ratio of carbonyl groups in the carbohydrate component to reactive nitrogen-containing groups in the first amine component is 5:1 to 1:2 or 5:1 to 1:1. For example, the ratio of carbonyl groups to reactive nitrogen-containing groups may be 5:1 to 1:1.8, 5:1 to 1:1.5, 5:1 to 1:1.2, 5:1 to 1:1, 5:1 to 1:0.8 and 5:1 to 1:0.5. Further examples include ratios such as 4:1 to 1:2, 3.5:1 to 1:2, 3:1 to 1:2, 2.5:1 to 1:2, 2:1 to 1:2 and 1.5:1 to 1:2. According to the present invention, the upper and lower borders of the above-mentioned ratios may be freely combined.

The pre-reacted binder as defined above may be obtained by reacting in a solvent the at least one carbohydrate component with the at least one first amine component at a temperature of at least 10°C for a period of at least 5 minutes.

The temperature at which the pre-reacted binder is prepared is, however, not specifically restricted and includes temperatures in the range of 10 to 200°C, 15 to 180°C, 20 to 150°C or 25 to 130°C. For example, the reaction temperature may range from 20 to 120°C, 25 to 110°C, 30 to 100°C or 35 to 90°C. Specific examples of the temperature range include 40 to 90°C, 45 to 85°C and 50 to 75°C. According to the present invention, the temperature at which the pre-reacted binder is prepared is not limited to the above ranges, and the upper and lower values of said ranges may be freely combined.

Similarly, the duration of the reaction to obtain the pre-reacted binder is not specifically restricted and includes durations of 5 to 240 minutes, 5 to 210 minutes, 5 to 180 minutes, 5 to 120 minutes, 5 to 90 minutes, 5 to 75 minutes 5 to 60 minutes, 5 to 40 minutes, 5 to 30 minutes and 5 to 25 minutes. Further examples include durations of 5 to 240 minutes, 10 to 240 minutes, 15 to 240 minutes, 20 to 240 minutes, 25 to 240 minutes, 30 to 240 minutes, 40 to 240 minutes, 45 to 240 minutes, 60 to 240 minutes, 120 to 240 minutes and 180 to 240 minutes. However, durations of up to one, two, three, four, five and six days, as well as durations of one, two or three weeks may also be reasonable within the scope of the present invention. According to the present invention, the duration for preparing the pre-reacted binder as defined above is not limited to the above examples and the upper and lower values of said ranges may be freely combined herein.

According to one embodiment, the above-defined pre-reacted binder further reacts with the second amine component to yield one or more melanoidins as a water-insoluble composition. In the present invention, the pre-reacted binder may function as a precursor or intermediate which may be further reacted with the second amine component to obtain a polymeric binder. For example, this polymeric binder contains high molecular weight melanoidins as Maillard reaction products which are essentially water-insoluble.

According to a further embodiment, the molar ratio between the carbohydrate component and the first amine component in the pre-reacted binder is 0.5:1 to 30:1. Examples of further molar ratios include ratios of 0.7:1 to 25:1, 1:1 to 22:1, 1.5:1 to 20:1, 2:1 to 15:1, 2.5:1 to 10:1 or 3:1 to 8:1. However, according to the present invention, the molar ratio of carbohydrate component to first amine component is not limited to said ranges and the above upper and lower borders may be freely combined.

Further, the pre-reacted binder may comprising one or more of a glycolaldehyde, glyceraldehyde, 2-oxopropanal, acetol, dihydroxyacetone, acetoin, butanedione, ethanal, glucosone, 1-desoxyhexosulose, 3-desoxyhexosulose, 3-desoxypentosulose, 1,3-didesoxyhexosulose, glyoxal, methylglyoxal and diacetyl, wherein an aqueous solution containing 70 wt.-% of said pre-reacted binder has a viscosity at 20°C of at most 2000 mPa·s, and the viscosity of said aqueous solution does not increase by more than 500 mPa·s when left to stand at 20°C for 12 hours.

According to the present invention, the total content of said one or more above-mentioned compounds may be at least 10 wt.-%, at least 20 wt.-%, at least 30 wt.-%, at least 40 wt.-%, at least 50 wt.-%, at least 60 wt.-%, or at least 75 wt.-% of the pre-reacted binder.

According to a preferred embodiment, the above-defined pre-reacted binder has an average molecular weight in the range of 200 to 5000 g/mol. According to the present invention, the average molecular weight of the pre-reacted binder compoition may range from 300 to 4500 g/mol, from 400 to 4000 g/mol, from 450 to 3500 g/mol, from 500 to 300 g/mol or from 600 to 1500 g/mol. However, the average molecular weight of the pre-reacted binder is not limited to said ranges and the upper and lower values thereof may be freely combined.

According to the present invention, the pre-reacted binder may change over time in its chemical composition by continuing the reaction between the carbohydrate component and the first amine component. For example, even at relatively low temperatures, such as room temperature (20°C) or below, the Maillard-type reactions may continue between the carbohydrate component and the first amine component towards the formation of melanoidins. As a consequence, ageing of the pre-reacted binder may lead to an accelerated final curing process of the binder and/or to an improved bond strength.

Various additives can be incorporated into the binder compositions of the present invention. These additives give the binders of the present invention additional desirable characteristics. For example, the binder may include a silicon-containing coupling agent. Many silicon-containing coupling agents are commercially available from the Dow-Corning Corporation, Evonik Industries, and Momentive Performance Materials. Illustratively, the silicon-containing coupling agent includes compounds such as silylethers and alkylsilyl ethers, each of which may be optionally substituted, such as with halogen, alkoxy, amino, and the like. In one variation, the silicon-containing compound is an amino-substituted silane, such as, gamma-aminopropyltriethoxy silane (SILQUEST A-1101; Momentive Performance Materials, Corporate Headquarters: 22 Corporate Woods Boulevard, Albany, NY 12211 USA). In another variation, the silicon-containing compound is an amino-substituted silane, for example, aminoethylaminopropyltrimethoxy silane (Dow Z-6020; Dow Chemical, Midland, MI; USA). In another variation, the silicon-containing compound is gamma-glycidoxypropyltrimethoxysilane (SILQUEST A-187; Momentive). In yet another variation, the silicon-containing compound is an aminofunctional oligomeric siloxane (HYDROSIL 2627, Evonik Industries, 379 Interpace Pkwy, Parsippany, NJ 07054).

The silicon-containing coupling agents are typically present in the binder in the range from about 0.1 percent to about 1 percent by weight based upon the dissolved binder solids (i.e., about 0.05% to about 3% based upon the weight of the solids added to the aqueous solution). These silicone containing compounds enhance the ability of the binder to adhere to the matter the binder is disposed on, such as glass fibers. Enhancing the binder's ability to adhere to the matter improves, for example, its ability to produce or promote cohesion in non- or loosely-assembled substance(s).

In another illustrative embodiment, a binder of the present invention may include one or more corrosion inhibitors. These corrosion inhibitors prevent or inhibit the eating or wearing away of a substance, such as, metal caused by chemical decomposition brought about by an acid. When a corrosion inhibitor is included in a binder of the present invention, the binder's corrosivity is decreased as compared to the corrosivity of the binder without the inhibitor present. In one embodiment, these corrosion inhibitors can be utilized to decrease the corrosivity of the mineral fiber-containing compositions described herein. Illustratively, corrosion inhibitors include one or more of the following, a dedusting oil, or a monoammonium phosphate, sodium metasilicate pentahydrate, melamine, tin(II) oxalate, and/or methylhydrogen silicone fluid emulsion. When included in a binder of the present invention, corrosion inhibitors are typically present in the binder in the range from about 0.5 percent to about 2 percent by weight based upon the dissolved binder solids.

A further aspect of the present invention relates to a method of manufacturing a collection of matter bound by a polymeric binder comprising the steps: (i) providing a collection of matter, (ii) providing the above-defined binder composition as a solution or dispersion, (iii) applying the solution or dispersion of step (ii) to the collection of matter, and (iv) applying heat to the collection of matter containing said solution or dispersion to cure the binder composition.

Herein, the term "collection of matter" is not particularly restricted and includes any collection of matter which comprises fibers selected from the group consisting of mineral fibers (slag wool fibers, rock wool fibers, or glass fibers), aramid fibers, ceramic fibers, metal fibers, carbon fibers, polyimide fibers, polyester fibers, rayon fibers, and cellulosic fibers. Further examples of a collection of matter include particulates such as coal, sand or glass fibers, cellulosic fibers, such as wood shavings, sawdust, wood pulp, or ground wood, as well as other natural fibers such as jute, flax, hemp, and straw; wood veneers; facings, wood facings, particles, woven or non-woven materials (e.g. comprising fibers, notably of the type(s) referred to above).

According to the present invention, step (iv) of applying heat to the collection of matter as defined in the above method is not particularly restricted and includes, for example, heating in an oven at a temperature of 100°C to 350°C, depending on the type of matter, the amount of binder and other conditions.

Binders in accordance with the present invention may be used as binders in articles selected from the group consisting of: thermal insulation materials; mineral wool insulation (including glass wool insulation and stone wool insulation); wood boards; fiberboards; wood particle boards; chip boards; orientated strand board; medium density fiberboards; high pressure laminates.

The Figures show:
Figure 1 shows: Cure rates of primary diamines with DMH at 140 °C.
Figure 2 shows: Cure rates of primary diamines with DMH at 125 °C.
Figure 3 shows: Cure rates of primary triamines and HMDA with DMH at 125 °C.
Figure 4 shows: Cure rates of a primary triamine and HMDA with a pre-reacted binder at 105 °C.

The binder compositions of the present invention advantageously overcome a variety of drawbacks known from common carbohydrate-based binders. Particularly, binder compositions of the present invention result in accelerated cure times, improved bond strength and superior swelling properties of resulting products.

The present invention will be further illustrated in the following examples, without limitation thereto.

### Example 1: Cure rate of primary diamines with DMH

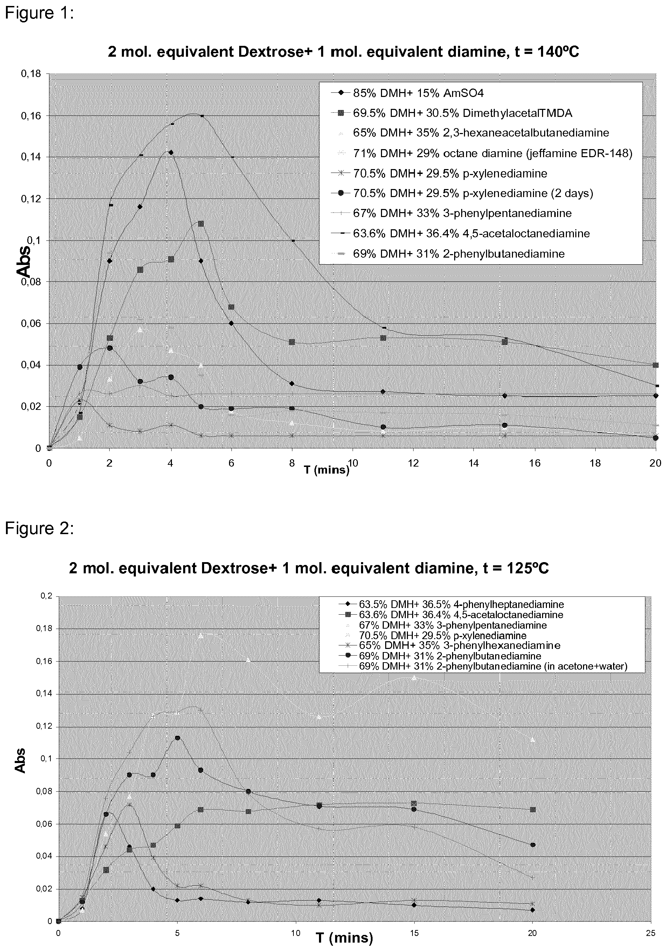

Several primary diamines were mixed with dextrose monohydrate (DMH) in water to obtain a solution/dispersion containing 1 molar equivalent of diamine and 2 molar equivalents of DMH. The amounts of components used in the binder compositions are expressed in Figures 1 and 2 as wt.-%, and the binders were prepared at 20% total solids weight.

Once the binder compositions were prepared, they were cured at 125 °C and 140 °C, respectively, and their cure rate was determined over time.

Figures 1 and 2 clearly show that the primary diamine compounds in which the amino groups are separated in the molecule by a spacer group having a length of 6 to 8 atoms achieve a superior cure rate. Moreover, the such primary diamines which contain a substituent within the spacer group (e.g. 3-phenylhexanediamine and 3-phenylheptanediamine) also show improved properties regarding cure rate.

### Example 2: Cure rate of primary triamines with DMH

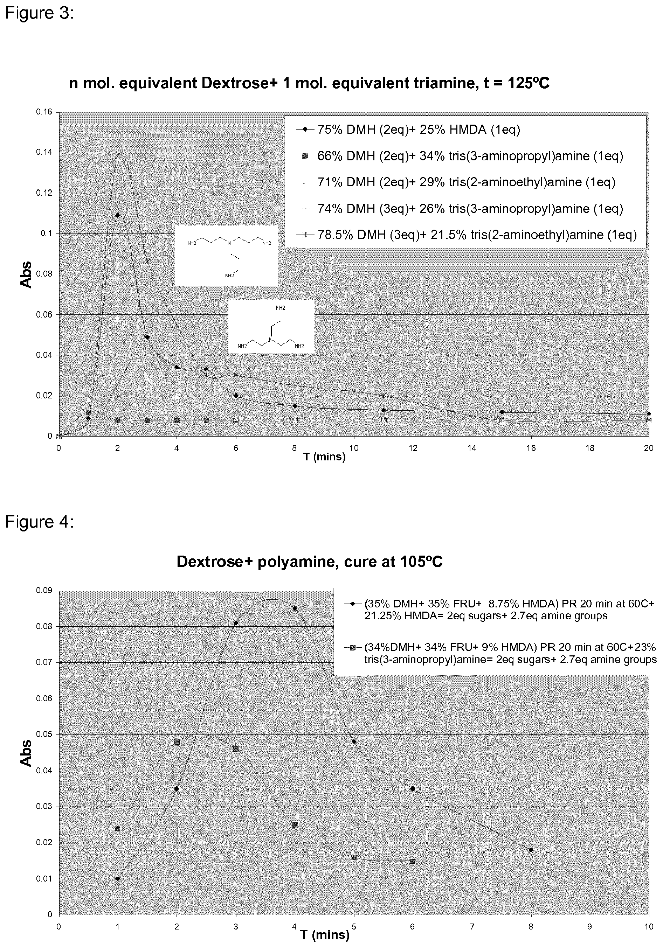

1 molar equivalent of tris(3-aminopropyl)amine and tris(2-aminoethyl)amine and n molar equivalents (n = 2 or 3) of dextrose monohydrate (DMH) as given in Figure 3 were reacted at 125°C. As a reference, 1 molar equivalent of hexamethylenediamine (HMDA) and 2 molar equivalents of DMH were also reacted at 125 °C. The results are depicted in Figure 3.

Figure 3 shows that tris(3-aminopropyl)amine and tris(2-aminoethyl)amine have a similar reactivity as compared to HMDA when reacted with the same ratio of carbonyl groups to amino groups (i.e. 2 eq of DMH with 1 eq HMDA; 3 eq of DMH with 1 eq of tris(3-aminopropyl)amine or tris(2-aminoethyl)amine). When an excess of primary amine with respect to DMH is used (i.e. 2 eq of DMH with 1 eq of tris(3-aminopropyl)amine or tris(2-aminoethyl)amine), the primary triamines react faster than HMDA.

### Example 3: Cure rate of primary triamines with a pre-reacted binder

A binder composition comprising a pre-reacted binder (DMH/fructose + HMDA, pre-reacted at 60 °C for 20 min) and tris(3-aminopropyl)amine was cured at 105 °C. As a reference, a binder comprising the above pre-reacted binder and HMDA was also cured at 105 °C. The results are depicted in Figure 4.

As can be taken from Figure 4, when comparing the two binder compositions having the same ratios of amine groups to sugars, the primary triamine shows a cure rate superior to that of HMDA.

### Example 4: Board lab trial

The binder composition for trial comprises a pre-reacted binder (68% DMH/fructose + 9% HMDA, pre-reacted at 60 °C for 20 min) and 23% tris(3-aminopropyl)amine. As a reference, a binder composition comprising a similar pre-reacted binder and 30% HMDA was selected, which is known to exhibit good swelling results and internal bond strength (IB).

Two boards (300×300×10 mm, 10% binder) were pressed (504 N, 195 °C) for various times using the above binder composition comprising tris(3-aminopropyl)amine. Regarding their internal bond strength and swelling properties, the boards were compared to other boards using 20% of the above-mentioned reference binder comprising HMDA. The internal bond strength (IB) was tested in accordance with EN 319:1993, while the swelling test was performed in accordance with EN 317:1993. While the press time using the primary triamine was three times shorter, boards containing the primary triamine showed excellent swelling behaviour and internal bond strength (cf. Table 1).

**Table 1: Comparison of triamine binder and standard HMDA binder**

| **Binder** | **Press Time (sees)** | **IB (N/mm²)** | **Swelling (after 2 hours)** | **Swelling (after 24 hours)** |
|---|---|---|---|---|
| pre-reacted binder (40% DMH + 40% fructose + 10% HMDA) + 10% HMDA | 160 | 0.935 | 44.90% | 56.25% |
| pre-reacted binder (40% DMH + 40% fructose + 10% HMDA) + 10% HMDA | 140 | 0.806 | 48.25% | 58.99% |
| pre-reacted binder (40% DMH + 40% fructose + 10% HMDA) + 10% HMDA | 240 | 0.944 | 30.48% | 36.50% |
| pre-reacted binder (40% DMH + 40% fructose + 10% HMDA) + 10% HMDA | 120 | 0.443 | 49.48% | 56.40% |
| pre-reacted binder (34% DMH + 34% fructose + 9% HMDA) + 23% tris(3-aminopropyl)amine | 100 | 1.148 | 29.45% | 37.53% |
| pre-reacted binder (34% DMH + 34% fructose + 9% HMDA) + 23% tris(3-aminopropyl)amine | 80 | 1.015 | 30.02% | 37.77% |

When adding 10.7% tris(3-aminopropyl)amine or 10% HMDA to the above-mentioned pre-reacted binder, equivalent ratios of amine groups to sugars in the respective binder compositions can be compared.

As can be taken from Table 2, the use of tris(3-aminopropyl)amine achieves swelling results superior than those obtained with the HMDA binder, when comparing equivalent amine group/sugar ratios (cf. Table 2).

**Table 2: Triamine binder compared to standard HMDA binder**

| **Binder** | **Press Time (sees)** | **IB (N/mm²)** | **Swelling (after 2 hours)** | **Swelling (after 24 hours)** |
|---|---|---|---|---|
| pre-reacted binder (40% DMH + 40% fructose + 10% HMDA) + 10% HMDA | 160 | 0.554 | 61.3% | 72.0% |
| pre-reacted binder (40% DMH + 40% fructose + 10% HMDA) + 10% HMDA | 120 | 0.290 | 68.4% | 81.8% |
| pre-reacted binder (39.7% DMH + 39.7% | | | | |
| fructose + 9.9% HMDA) + 10.7% tris(3-aminopropyl)amine | 140 | 0.655 | 74.3% | 90.2% |
| pre-reacted binder (39.7% DMH + 39.7% fructose + 9.9% HMDA) + 10.7% tris(3-aminopropyl)amine | 160 | 0.723 | 61.3% | 75.8% |

## Claims

1. A binder composition comprising a polymeric product of at least one carbohydrate component and at least one amine component, wherein the at least one amine component comprises a substituted or unsubstituted primary diamine and/or a substituted or unsubstituted primary triamine.

2. The binder composition according to claim 1, wherein the polymeric product is a product of the at least one carbohydrate component, the at least one amine component, and at least one additional crosslinker which is different from the amine component.

3. The binder composition according to claim 1 or 2, wherein the substituted or unsubstituted primary diamine is a compound wherein the amino groups are separated in the molecule by a spacer group having a length of 4 to 12 atoms.

4. The binder composition according to claim 3, wherein the substituted or unsubstituted primary diamine is a compound wherein the amino groups are separated in the molecule by a spacer group having a length of 6 to 8 atoms.

5. The binder composition according to any one of claims 3 or 4, wherein the primary diamine further contains at least one substituent within the spacer group.

6. The binder composition according to claim 1 or 2, wherein the substituted or unsubstituted primary triamine is a compound wherein at least two of the primary amino groups are separated in the molecule by a spacer group having a length of 4 to 12 atoms.

7. The binder composition according to claim 6, wherein the substituted or unsubstituted primary triamine is a compound wherein at least two of the primary amino groups are separated in the molecule by a spacer group having a length of 6 to 8 atoms.

8. The binder composition according to any one of claims 1 to 7, wherein the at least one carbohydrate component is selected from the group consisting of monosaccharides, disaccharides, polysaccharides or a reaction product thereof.

9. The binder composition according to any one of claims 1 to 8, wherein the at least one carbohydrate component is selected from the group consisting of ribose, arabinose, xylose, lyxose, glucose (dextrose), mannose, galactose, allose, altrose, talose, gulose, idose, fructose, psicose, sorbose, dihydroxyacetone, sucrose and tagatose, as well as mixtures thereof.

10. The binder composition according to any one of claims 1 to 9, wherein the molar ratio between the at least one carbohydrate component and the substituted or unsubstituted primary diamine is 6:1 to 0.5:1.

11. The binder composition according to any one of claims 1 to 9, wherein the molar ratio between the at least one carbohydrate component and the substituted or unsubstituted primary triamine is 5:1 to 1:1.

12. A binder composition comprising a water-soluble pre-reacted binder and at least one second amine component,
wherein the water-soluble pre-reacted binder comprises the reaction product(s) of at least one carbohydrate component and at least one first amine component, wherein the ratio of the reactive nitrogen-containing groups of the at least one first amine component to the carbonyl groups of the at least one carbohydrate component is substoichiometric such that there is no full conversion of the at least one carbohydrate component, and
wherein the at least one second amine component comprises a substituted or unsubstituted primary diamine and/or a substituted or unsubstituted primary triamine.

13. A method of manufacturing a collection of matter bound by a polymeric binder comprising the steps:
(i) providing a collection of matter,
(ii) providing the binder composition according to any one of claims 1 to 12 as a solution or dispersion,
(iii) applying the solution or dispersion of step (ii) to the collection of matter, and
(iv) applying heat to the collection of matter containing said solution or dispersion to cure the binder composition.
